# FASCICULE DE BREVET EUROPEEN

(11) **EP 2 617 155 B1**
(45) Date de publication et mention de la délivrance du brevet: **06.04.2016**
(21) Numéro de dépôt: 11757304.8
(22) Date de dépôt: 14.09.2011
(51) Int. Cl.: H04L 9/00, H04L 9/32, G06F 21/36, H04L 29/06

(54) **ENREGISTREMENT SECURISE A UN SERVICE FOURNI PAR UN SERVEUR WEB**
SICHERE REGISTRIERUNG BEI EINEM VON EINEM WEBSERVER BEREITGESTELLTEN DIENST
SECURE REGISTRATION TO A SERVICE PROVIDED BY A WEB SERVER

(30) Priorité: 15.09.2010 FR 1057352
(43) Date de publication de la demande: 24.07.2013
(73) Titulaire: ALCATEL LUCENT, 92100 Boulogne-Billancourt (FR)
(72) Inventeur: JOUBERT, Eric, F-91620 Nozay (FR); LU, Monique, F-91620 Nozay (FR)
(74) Mandataire: Mouney, Jérôme
(86) Numéro de dépôt international: PCT/EP2011/065914
(87) Numéro de publication internationale: WO 2012/035051

(56) Documents cités:
- EP-A1- 1 845 468
- US-A1- 2002 120 853
- US-A1- 2007 156 592
- US-A1- 2009 150 983
- PHIL HAACK: "Better CAPTCHA Through Encryption", INTERNET CITATION, 10 février 2006 (2006-02-10), pages 1-16, XP007918095, Extrait de l'Internet: URL:http://haacked.com/archive/2006/10/02/ Better_CAPTCHA_Through_Encryption.aspx [extrait le 2011-04-05]

## Description

La présente invention concerne un procédé de contrôle d'accès dans le cadre d'un réseau de télécommunications, et plus particulièrement le contrôle d'un processus d'identification par un test visant à discriminer les humains des ordinateurs pour l'enregistrement à un service fourni par un serveur dans un réseau de télécommunications.

Pour s'enregistrer à un service délivré par un serveur, un utilisateur peut être amené à satisfaire un test afin d'éviter que des robots s'enregistrent automatiquement. Un tel test peut être un test de type "captcha" (Acronyme de "Completely Automated Public Turing test to Tell Computers and Humans Apart" en anglais) qui est un test dit de "turing" automatisé afin de distinguer les ordinateurs des humains. Plus précisément, un tel test peut demander à un humain de déchiffrer un petit fragment de texte dont l'image est déformée et contaminée de bruit graphique.

Différents types de test de type "captcha" ont été développés, en utilisant par exemple des questions sur des images ou des textes difficiles à lire. Cependant, des pirates ont développé des outils permettant de satisfaire de tels tests automatiquement, au moyen par exemple d'outils de reconnaissance textuelle, d'outils de translation "parole" à "texte", ou encore des algorithmes de reconnaissance d'image.

Actuellement, il existe trois types d'attaques pirates permettant de détourner les tests de type "captcha":
- une résolution par des robots automatiques,
- une résolution par des humains payés à cette fin,
- une résolution par un humain qui travaille involontairement par l'intermédiaire d'un site pirate qui utilise insidieusement l'utilisateur en redirigeant vers ce dernier un test de type "captcha" pour qu'il le résolve.

Dans ce dernier cas, l'utilisateur résout un test de type "captcha" sans savoir qu'il fournit une réponse à un site pirate qui pourra alors utiliser cette réponse pour s'enregistrer auprès d'un service délivré par un serveur.

Il existe un besoin de contrer ce type d'attaque réalisé par l'intermédiaire d'un site pirate qui est situé entre le terminal d'un utilisateur et un serveur auquel le terminal est connecté et qui peut intercepter les communications entre le terminal et le serveur.

EP1845468 A1 décrit un système dans lequel un filtrage est effectué pour bloquer les échanges non sollicités dans un réseau. Ceci est fait grâce à une demande d'accès chiffrée avec une clé envoyée par le serveur déchiffré d'une information envoyée par le serveur à partir d'une clé dérivée des adresses IP du client et du serveur et d'autres informations venant du serveur. Parmi ces informations, se trouve la réponse à un test de type CAPTCHA. 5

Un objectif de l'invention est de proposer notamment un système pour sécuriser l'enregistrement à un service fourni par un serveur web, le système étant apte à empêcher un tiers d'intercepter des réponses à des tests visant à discriminer les humains des ordinateurs émises par des utilisateurs pour l'enregistrement audit service.

Pour atteindre cet objectif, un procédé pour contrôler un enregistrement sécurisé à un service fourni par un serveur web depuis un terminal de communication dans un réseau de télécommunications, comprend les étapes suivantes :
suite à une connexion du terminal de communication au serveur web ayant invité l'utilisateur à fournir une adresse de messagerie électronique, mémoriser un code généré dynamiquement en correspondance avec l'adresse IP du terminal de communication et transmettre un message contenant le code à l'adresse de messagerie électronique fournie par l'utilisateur,
transmettre une application au terminal de communication qui installe automatiquement l'application reçue, l'application étant apte à générer un test automatisé afin de distinguer les ordinateurs des humains et apte à transmettre une réponse au test directement au serveur web,
déchiffrer une réponse à un test généré par l'application qui a été fournie par l'utilisateur et transmise depuis le terminal de communication, la réponse ayant été chiffrée avec l'adresse IP du terminal de communication et le code contenu dans le message transmis à l'adresse de messagerie électronique fournie par l'utilisateur, et
comparer la réponse déchiffrée avec une réponse attendue afin d'autoriser l'accès au serveur web par l'utilisateur si la réponse déchiffrée correspond à la réponse attendue.

Avantageusement, l'invention offre une solution évitant des attaques pirates permettant de détourner les tests de type "captcha" par l'intermédiaire d'un site pirate qui utilise insidieusement l'utilisateur en redirigeant vers ce dernier un test de type "captcha" pour qu'il le résolve. Ainsi, le serveur web est assuré que l'utilisateur résolvant le test de type "captcha" est bien l'utilisateur qui s'est connecté au site web pour accéder au service de ce dernier.

Selon une autre caractéristique de l'invention, l'application peut être sous forme d'instructions de programme exécutables par un navigateur internet du terminal de communication. L'application est ainsi embarquée dans le navigateur, ce qui permet une transmission directe de la réponse de l'utilisateur vers le serveur web.

Selon une autre caractéristique de l'invention, le test généré par l'application peut être un test de type "captcha".

Selon une autre caractéristique de l'invention, le serveur web peut produire dynamiquement des paramètres pour ledit test fourni par l'application et transmettre l'application incluant les paramètres au terminal de communication.

Selon une autre caractéristique de l'invention, le serveur web peut mémoriser une réponse attendue en correspondance avec l'adresse IP du terminal de communication, la réponse attendue dépendant des paramètres produits.

Selon une autre caractéristique de l'invention, le serveur web peut transmettre un message au terminal de communication afin d'informer l'utilisateur qu'un message a été transmis à l'adresse de messagerie électronique fournie par l'utilisateur.

Selon une autre caractéristique de l'invention, le serveur web peut vérifier en outre que ladite réponse a été transmise depuis la même adresse IP que celle mémorisée précédemment en correspondance avec le code généré.

L'invention concerne également un serveur web pour un enregistrement sécurisé à un service fourni par le serveur web depuis un terminal de communication dans un réseau de télécommunications, le serveur web comprenant :
des moyens pour mémoriser un code généré dynamiquement en correspondance avec l'adresse IP du terminal de communication et transmettre un message contenant le code à une adresse de messagerie électronique fournie par l'utilisateur, suite à une connexion du terminal de communication au serveur web ayant invité l'utilisateur à fournir l'adresse de messagerie électronique,
des moyens pour transmettre une application au terminal de communication qui installe automatiquement l'application reçue, l'application étant apte à générer un test automatisé afin de distinguer les ordinateurs des humains et apte à transmettre une réponse au test directement au serveur web,
des moyens pour déchiffrer une réponse à un test généré par l'application qui a été fournie par l'utilisateur et transmise depuis le terminal de communication, la réponse ayant été chiffrée avec l'adresse IP du terminal de communication et le code contenu dans le message transmis à l'adresse de messagerie électronique fournie par l'utilisateur, et
des moyens pour comparer la réponse déchiffrée avec une réponse attendue afin d'autoriser l'accès au serveur web par l'utilisateur si la réponse déchiffrée correspond à la réponse attendue.

L'invention se rapporte encore à un programme d'ordinateur apte à être mis en oeuvre dans un serveur, ledit programme comprenant des instructions qui, lorsque le programme est exécuté dans ledit serveur, réalisent les étapes selon le procédé de l'invention.

La présente invention et les avantages qu'elle procure seront mieux compris au vu de la description ci-après faite en référence aux figures annexées, dans lesquelles :
- la figure 1 est un bloc-diagramme schématique d'un système de communication selon une réalisation de l'invention, et
- la figure 2 est un algorithme d'un procédé pour contrôler des communications sécurisées entre un terminal et un serveur selon une réalisation de l'invention.

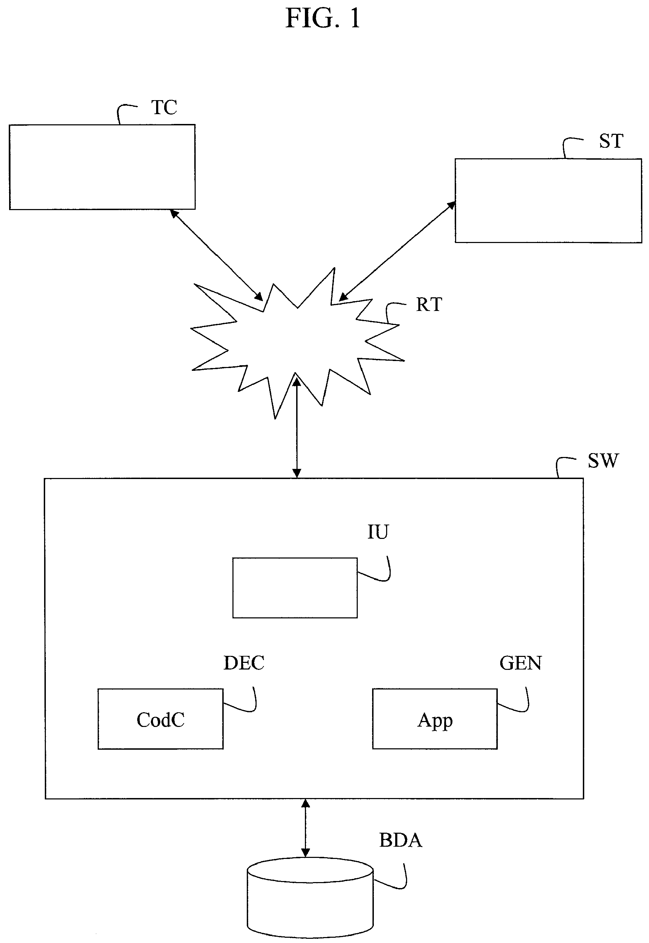

En référence à la figure 1, un système de communication comprend au moins un serveur web SW et un terminal de communication TC, et éventuellement un serveur tiers ST, aptes à communiquer entre eux à travers un réseau de télécommunications RT.

Le réseau de télécommunications RT peut être un réseau filaire ou sans fil, ou une combinaison de réseaux filaires et de réseaux sans fil.

Selon un exemple, le réseau de télécommunications RT est un réseau de paquets à haut débit de type IP ("Internet Protocol" en anglais), tel que l'internet ou un intranet.

Selon un exemple, un terminal de communication TC est un ordinateur personnel relié directement par modem à une liaison de type xDSL ("Digital Subscriber Line" en anglais) ou RNIS (Réseau Numérique à Intégration de Services) reliée au réseau de télécommunications RT.

Selon un autre exemple, un terminal de communication TC est un terminal de radiocommunications cellulaire mobile, relié par un canal de radiocommunication au réseau de télécommunications, par exemple de type GSM ("Global System for Mobile communications" en anglais) ou UMTS ("Universal Mobile Télécommunications System" en anglais).

Selon un autre exemple, un terminal de communication TC comprend un dispositif ou objet électronique de télécommunications qui est personnel à l'utilisateur et qui peut être un assistant numérique personnel communicant PDA ("Personnal Digital Assistant" en anglais), ou un téléphone intelligent (SmartPhone), pouvant être relié à une borne d'accès d'un réseau public sans fil de faible portée du type WLAN ("Wireless Local Area Network" en anglais) ou conforme à l'une des normes 802.1x, ou de moyenne portée selon le protocole WIMAX ("World wide Interoperability Microwave Access" en anglais), relié au réseau de télécommunications.

Le serveur web SW héberge un ou plusieurs sites web, tel qu'un site de vente en ligne ou un site d'enregistrement pour paiement en ligne.

Le serveur web SW comprend un module de génération GEN, un module de décodage DEC, et une interface utilisateur IU.

Dans la suite de la description, le terme module peut désigner un dispositif, un logiciel ou une combinaison de matériel informatique et de logiciel, configuré pour exécuter au moins une tâche particulière.

Le serveur web SW est lié à une base de données d'authentification BDA qui est intégrée dans le serveur web SW ou incorporée dans un serveur de gestion de base de données relié au serveur web SW par une liaison locale ou distante.

En particulier, la base de données d'authentification BDA contient des informations sur l'utilisateur permettant d'authentifier ce dernier, ainsi que la réponse attendue par serveur lors de l'enregistrement de cet utilisateur.

Le module de génération GEN fournit une application App de test de type "captcha" et génère dynamiquement un test. Plus particulièrement, l'application App est sous forme d'instructions de programme exécutables par un navigateur internet, et le test généré peut être interprété par l'application exécutée par le navigateur pour présenter une question à l'utilisateur.

Par exemple lorsque l'utilisateur fait une demande d'enregistrement auprès du site hébergé par le serveur web SW, le module GEN transmet automatiquement l'application au terminal TC qui installe automatiquement, optionnellement avec l'accord de l'utilisateur, l'application qui est ensuite gérée par le navigateur au moyen duquel l'utilisateur est connecté directement au site web. En d'autres termes, l'application App peut être considérée comme un "plug-in" du navigateur internet.

Le module de décodage DEC mémorise l'adresse IP ("Internet Protocol" en anglais) du terminal TC de l'utilisateur et une adresse de messagerie électronique fournie par l'utilisateur dans la base de données BDA. Le module de décodage DEC mémorise en outre un code de chiffrement CodC et la réponse attendue au test généré par le module GEN dans la base de données BDA.

Le module de décodage DEC reçoit la réponse de l'utilisateur au test proposé par l'application App, et vérifie que la réponse a été transmise depuis la même adresse IP que celle mémorisée précédemment. Le module DEC compare la réponse reçue avec la réponse attendue mémorisée dans la base de données BDA.

Optionnellement, le module de décodage DEC vérifie un temps d'attente entre le moment où l'utilisateur s'est enregistré auprès du site web et le moment où l'utilisateur a transmis une réponse au test proposé par l'application. Par exemple, ce temps d'attente peut être de deux ou trois minutes, prenant en compte le temps estimé nécessaire à l'utilisateur pour recevoir le courrier électronique comprenant le code de chiffrement CodC et résoudre le test de type "captcha".

L'interface d'utilisateur IU permet à un utilisateur de renseigner ses coordonnées par exemple pour s'enregistrer auprès du site web. En particulier, l'utilisateur est invité à renseigner une adresse de messagerie électronique à laquelle le serveur web pourra transmettre un code de chiffrement.

Le serveur tiers ST est un serveur géré par un pirate dans le but d'intercepter les communications entre le terminal de communication TC et le serveur web SW.

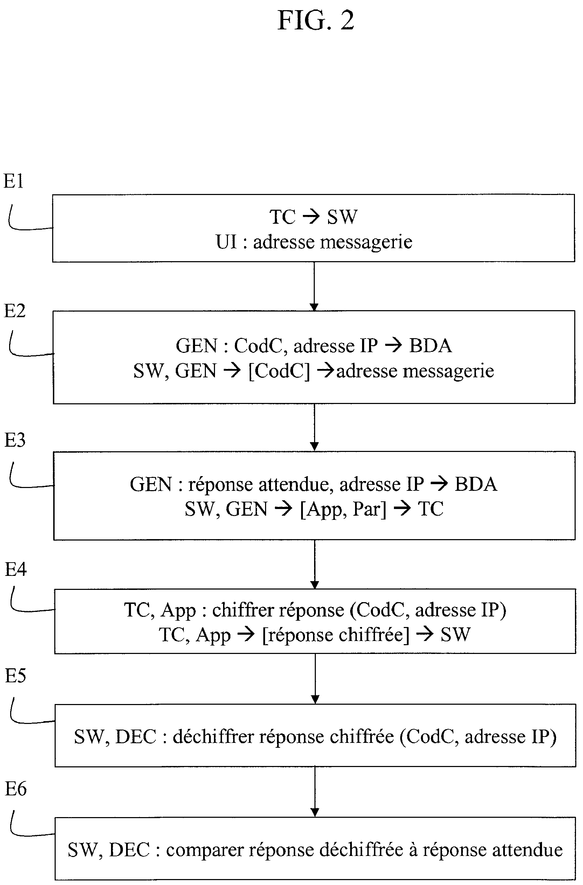

En référence à la figure 2, un procédé pour contrôler un enregistrement sécurisé à un service fourni par un serveur web depuis un terminal de communication selon une réalisation de l'invention comprend des étapes E1 à E6 exécutées dans le système de communication.

A l'étape E1, l'utilisateur se connecte au site web hébergé par le serveur web SW via le terminal de communication TC.

Par exemple, l'utilisateur souhaite s'enregistrer auprès du site web afin de bénéficier du service offert par le site web.

Via l'interface utilisateur UI, le site web invite l'utilisateur à renseigner ses coordonnées, et notamment une adresse de messagerie électronique.

Le module de décodage DEC mémorise l'adresse IP du terminal TC de l'utilisateur et l'adresse de messagerie électronique fournie par l'utilisateur dans la base de données BDA.

A l'étape E2, le module de génération GEN génère dynamiquement un code de chiffrement CodC et le mémorise dans la base de données BDA, en correspondance avec l'adresse IP de l'utilisateur. Le module de génération GEN transmet un message contenant le code de chiffrement CodC à l'adresse de messagerie électronique fournie par l'utilisateur.

A l'étape E3, le module de génération GEN produit dynamiquement des paramètres Par pour un test de type "captcha" et mémorise une réponse attendue pour ce test dans la base de données BDA, en correspondance avec l'adresse IP de l'utilisateur, la réponse attendue dépendant des paramètres produits. Le module de génération GEN transmet une application App incluant les paramètres Par générés pour un test de type "captcha" au terminal de communication TC.

Le module de génération GEN transmet en outre un message au terminal TC afin d'informer l'utilisateur qu'un message a été transmis à l'adresse de messagerie électronique fournie par l'utilisateur. Cette information peut être fournie à l'utilisateur à l'issu de l'étape E2 ou E3.

A l'étape E4, le terminal de communication TC installe automatiquement l'application App reçue qui est ensuite gérée par le navigateur internet du terminal.

L'utilisateur est invité par l'application App installée à consulter sa messagerie électronique afin de récupérer le code de chiffrement CodC inclus dans un message reçu. L'utilisateur indique son identité d'accès au service, son mot de passe associé, et est en outre invité à résoudre un test de type "captcha" généré par l'application App au moyen des paramètres Par transmis avec l'application.

L'application App chiffre la réponse fournie par l'utilisateur avec l'adresse IP du terminal TC et le code de chiffrement CodC qui est fourni par l'utilisateur après l'avoir récupéré dans la messagerie électronique. L'application App transmet la réponse chiffrée directement au serveur web SW, l'application possédant l'adresse exacte de destination du serveur web et la réponse ne pouvant pas être adressée à un serveur tiers. En particulier, l'adresse du service où doit être envoyée la réponse, localisé sur le serveur web, est "codée en dur" dans l'application. De ce fait, l'application ne renvoie pas la réponse à l'entité qui a fourni l'application (qui pourrait être un site pirate si celui-ci a "capturé" au préalable cette application) mais renvoie "directement" la réponse au service de destination sur le serveur web.

A l'étape E5, le module de décodage DEC vérifie que la réponse chiffrée a été transmise depuis la même adresse IP que celle mémorisée précédemment en correspondance avec le code généré CodC. Le module de décodage DEC déchiffre la réponse chiffrée avec l'adresse IP et le code de chiffrement CodC mémorisés dans la base de données BDA.

A l'étape E6, le module de décodage DEC compare la réponse déchiffrée avec la réponse attendue mémorisée dans la base de données BDA.

Le serveur web SW autorise l'enregistrement de l'utilisateur si la réponse déchiffrée est la même que la réponse attendue.

Optionnellement, le module de décodage DEC vérifie un temps d'attente entre le moment où l'utilisateur s'est enregistré auprès du site web et le moment où l'utilisateur a transmis une réponse au test proposé par l'application. Si le temps d'attente excède un intervalle de temps prédéfini, le serveur web SW n'autorise pas l'enregistrement de l'utilisateur.

Ainsi, si un pirate, par l'intermédiaire d'un serveur tiers ST, tente d'intercepter des communications entre le terminal de communication TC et le serveur web SW, il devra être à l'origine de la requête vers le serveur web SW. Dans le cas où le pirate ne change pas son adresse IP, la solution reçue par le serveur web SW ne sera pas acceptée par ce dernier puisque l'adresse IP utilisée pour chiffrer la solution au test (l'adresse IP de l'utilisateur) ne correspondra pas à l'adresse IP utilisée par le serveur web SW pour déchiffrer cette solution (l'adresse IP du pirate).

De plus, dans le cas où le pirate change son adresse IP et la remplace par celle de l'utilisateur, par exemple lorsque l'utilisateur se connecte au serveur web SW, l'exécution de l'application App pour la transmission de la solution au test permet un dialogue direct entre l'utilisateur et le serveur web sans passage via le serveur tiers du pirate. En effet, la destination de la réponse contenant la solution est chiffrée par l'application et le pirate ne peut pas intercepter la réponse.

Grâce au code CodC transmis à l'utilisateur, une action humaine est requise pour lire le message électronique contenant ledit code. De plus, ledit code est utilisé avec l'adresse IP de l'utilisateur pour chiffrer la solution au test de type "captcha". Ainsi, si une personne espionne l'utilisateur pour retrouver la solution, cette dernière ne peut être réutilisée puisque le code et l'adresse IP sont inconnus de cette personne.

L'invention décrite ici concerne un procédé et un serveur web pour contrôler un enregistrement sécurisé à un service fourni par le serveur web depuis un terminal de communication. Selon une implémentation de l'invention, les étapes du procédé de l'invention sont déterminées par les instructions d'un programme d'ordinateur incorporé dans un serveur, tel que le serveur web SW. Le programme comporte des instructions de programme, qui lorsque ledit programme est chargé et exécuté dans le serveur, réalisent les étapes du procédé de l'invention.

En conséquence, l'invention s'applique également à un programme d'ordinateur, notamment un programme d'ordinateur sur ou dans un support d'informations, adapté à mettre en oeuvre l'invention. Ce programme peut utiliser n'importe quel langage de programmation, et être sous la forme de code source, code objet, ou code intermédiaire entre code source et code objet tel que dans une forme partiellement compilée, ou dans n'importe quelle autre forme souhaitable pour implémenter le procédé selon l'invention.

## Revendications

1. Procédé pour contrôler un enregistrement sécurisé à un service fourni par un serveur web (SW) depuis un terminal de communication (TC) dans un réseau de télécommunications (RT), le procédé comprenant les étapes suivantes exécutées dans le serveur web :
suite à une connexion du terminal de communication (TC) au serveur web (SW) ayant invité l'utilisateur à fournir une adresse de messagerie électronique, mémoriser (E2) un code (CodC) généré dynamiquement en correspondance avec l'adresse IP du terminal de communication (TC) et transmettre un message contenant le code (CodC) à l'adresse de messagerie électronique fournie par l'utilisateur,
transmettre (E3) une application (App) au terminal de communication (TC) qui installe automatiquement l'application reçue (App), l'application étant apte à générer un test automatisé afin de distinguer les ordinateurs des humains et apte à transmettre une réponse au test directement au serveur web,
déchiffrer (E5) une réponse à un test généré par l'application (App) qui a été fournie par l'utilisateur et transmise depuis le terminal de communication (TC), la réponse ayant été chiffrée avec l'adresse IP du terminal de communication et le code (CodC) contenu dans le message transmis à l'adresse de messagerie électronique fournie par l'utilisateur, et
comparer (E6) la réponse déchiffrée avec une réponse attendue afin d'autoriser l'accès au serveur web par l'utilisateur si la réponse déchiffrée correspond à la réponse attendue.

2. Procédé conforme à la revendication 1, selon lequel l'application (App) est sous forme d'instructions de programme exécutables par un navigateur internet du terminal de communication (TC).

3. Procédé conforme à la revendication 1 ou 2, selon lequel le test généré par l'application (App) est un test de type "captcha".

4. Procédé conforme à l'une des revendications 1 à 3, selon lequel le serveur web (SW) produit dynamiquement des paramètres (Par) pour ledit test fourni par l'application (App) et transmet l'application (App) incluant les paramètres (Par) au terminal de communication (TC).

5. Procédé conforme à la revendication 4, selon lequel le serveur web (SW) mémorise une réponse attendue en correspondance avec l'adresse IP du terminal de communication (TC), la réponse attendue dépendant des paramètres produits.

6. Procédé conforme à l'une des revendications 1 à 5, selon lequel le serveur web (SW) transmet un message au terminal de communication (TC) afin d'informer l'utilisateur qu'un message a été transmis à l'adresse de messagerie électronique fournie par l'utilisateur.

7. Procédé conforme à l'une des revendications 1 à 6, selon lequel le serveur web (SW) vérifie en outre que ladite réponse a été transmise depuis la même adresse IP que celle mémorisée précédemment en correspondance avec le code (CodC) généré.

8. Serveur web (SW) pour contrôler un enregistrement sécurisé à un service fourni par le serveur web (SW) depuis un terminal de communication (TC) dans un réseau de télécommunications (RT), comprenant :
des moyens (GEN) pour mémoriser un code généré dynamiquement en correspondance avec l'adresse IP du terminal de communication (TC) et transmettre un message contenant le code (CodC) à une adresse de messagerie électronique fournie par l'utilisateur, suite à une connexion du terminal de communication (TC) au serveur web (SW) ayant invité l'utilisateur à fournir l'adresse de messagerie électronique,
des moyens (GEN) pour transmettre une application (App) au terminal de communication (TC) qui installe automatiquement l'application reçue (App), l'application étant apte à générer un test automatisé afin de distinguer les ordinateurs des humains et apte à transmettre une réponse au test directement au serveur web,
des moyens (DEC) pour déchiffrer une réponse à un test généré par l'application (App) qui a été fournie par l'utilisateur et transmise depuis le terminal de communication (TC), la réponse ayant été chiffrée avec l'adresse IP du terminal de communication et le code (CodC) contenu dans le message transmis à l'adresse de messagerie électronique fournie par l'utilisateur, et
des moyens (DEC) pour comparer la réponse déchiffrée avec une réponse attendue afin d'autoriser l'accès au serveur web par l'utilisateur si la réponse déchiffrée correspond à la réponse attendue.

9. Programme d'ordinateur apte à être mis en oeuvre dans un serveur web (SW) pour contrôler un enregistrement sécurisé à un service fourni par le serveur web (SW) depuis un terminal de communication (TC) dans un réseau de télécommunications (RT), ledit programme comprenant des instructions qui, lorsque le programme est chargé et exécuté dans ledit serveur web, réalisent les étapes suivantes :
suite à une connexion du terminal de communication (TC) au serveur web (SW) ayant invité l'utilisateur à fournir une adresse de messagerie électronique, mémoriser (E2) un code généré dynamiquement en correspondance avec l'adresse IP du terminal de communication (TC) et transmettre un message contenant le code (CodC) à l'adresse de messagerie électronique fournie par l'utilisateur,
transmettre (E3) une application (App) au terminal de communication (TC) qui installe automatiquement l'application reçue (App), l'application étant apte à générer un test automatisé afin de distinguer les ordinateurs des humains et apte à transmettre une réponse au test directement au serveur web,
déchiffrer (E5) une réponse à un test généré par l'application (App) qui a été fournie par l'utilisateur et transmise depuis le terminal de communication (TC), la réponse ayant été chiffrée avec l'adresse IP du terminal de communication et le code (CodC) contenu dans le message transmis à l'adresse de messagerie électronique fournie par l'utilisateur, et
comparer (E6) la réponse déchiffrée avec une réponse attendue afin d'autoriser l'accès au serveur web par l'utilisateur si la réponse déchiffrée correspond à la réponse attendue.

## Patentansprüche

1. Verfahren zur Steuerung einer sicheren Registrierung bei einem Dienst, der von einem Webserver (SW) bereitgestellt wird, von einem Kommunikationsendgerät (TC) in einem Telekommunikationsnetzwerk (RT), wobei das Verfahren die folgenden in dem Webserver ausgeführten Schritte umfasst:
im Anschluss an eine Verbindung des Kommunikationsendgeräts (TC) mit dem Webserver (SW), der den Benutzer dazu aufgefordert hat, eine E-Mail-Adresse bereitzustellen, Speichern (E2) eines dynamisch erstellten Codes (CodC) in Verbindung mit der IP-Adresse des Kommunikationsendgeräts (TC) und Übertragen einer Nachricht, die den Code (CodC) enthält, an die vom Benutzer bereitgestellte E-Mail-Adresse,
Übertragen (E3) einer Anwendung (App) an das Kommunikationsendgerät (TC), das die empfangene Anwendung (App) automatisch installiert, wobei die Anwendung einen automatisierten Test erstellen kann, um Computer von Menschen zu unterscheiden, und eine Antwort auf den Test direkt an den Webserver übertragen kann,
Entschlüsseln (E5) einer Antwort auf einen von der Anwendung (App) erstellten Test, die von dem Benutzer bereitgestellt und von dem Kommunikationsendgerät (TC) übertragen wurde, wobei die Antwort mit der IP-Adresse des Kommunikationsendgeräts und dem Code (CodC) verschlüsselt wurde, der in der Nachricht enthalten ist, die an die von dem Benutzer bereitgestellte E-Mail-Adresse übertragen wurde, und
Vergleichen (E6) der entschlüsselten Antwort mit einer erwarteten Antwort, um den Zugriff auf den Webserver durch den Benutzer zu autorisieren, wenn die entschlüsselte Antwort der erwarteten Antwort entspricht.

2. Verfahren nach Anspruch 1, wobei die Anwendung (App) in der Form von Programmbefehlen ist, die durch einen Internetbrowser des Kommunikationsendgeräts (TC) ausführbar sind.

3. Verfahren nach Anspruch 1 oder 2, wobei der von der Anwendung (App) erstellte Test ein Test vom "Captcha"-Typ ist.

4. Verfahren nach einem der Ansprüche 1 bis 3, wobei der Webserver (SW) Parameter (Par) für den besagten Test, der von der Anwendung (App) bereitgestellt wird, dynamisch produziert und die Anwendung (App), die die Parameter (Par) beinhaltet, an das Kommunikationsendgerät (TC) überträgt.

5. Verfahren nach Anspruch 4, wobei der Webserver (SW) eine erwartete Antwort in Verbindung mit der IP-Adresse des Kommunikationsendgeräts (TC) speichert, wobei die erwartete Antwort von produzierten Parametern abhängt.

6. Verfahren nach einem der Ansprüche 1 bis 5, wobei der Webserver (SW) eine Nachricht an das Kommunikationsendgerät (TC) überträgt, um den Benutzer zu informieren, dass eine Nachricht an die von dem Benutzer bereitgestellte E-Mail-Adresse übertragen wurde.

7. Verfahren nach einem der Ansprüche 1 bis 6, wobei der Webserver (SW) außerdem verifiziert, dass die besagte Antwort von derselben IP-Adresse wie der zuvor in Verbindung mit dem erstellten Code (CodC) gespeicherten übertragen wurde.

8. Webserver (SW) zur Steuerung einer sicheren Registrierung bei einem Dienst, der von dem Webserver (SW) bereitgestellt wird, von einem Kommunikationsendgerät (TC) in einem Telekommunikationsnetzwerk (RT), umfassend:
Mittel (GEN) zum Speichern eines dynamisch erstellten Codes in Verbindung mit der IP-Adresse des Kommunikationsendgeräts (TC) und Übertragen einer Nachricht, die den Code (CodC) enthält, an eine von dem Benutzer bereitgestellte E-Mail-Adresse im Anschluss an eine Verbindung des Kommunikationsendgeräts (TC) mit dem Webserver (SW), der den Benutzer dazu aufforderte, eine E-Mail-Adresse bereitzustellen,
Mittel (GEN) zum Übertragen einer Anwendung (App) an das Kommunikationsendgerät (TC), das die empfangene Anwendung (App) automatisch installiert, wobei die Anwendung einen automatisierten Test erstellen kann, um Computer von Menschen zu unterscheiden, und eine Antwort auf den Test direkt an den Webserver übertragen kann,
Mittel (DEC) zum Entschlüsseln einer Antwort auf einen von der Anwendung (App) erstellten Test, die von dem Benutzer bereitgestellt und von dem Kommunikationsendgerät (TC) übertragen wurde, wobei die Antwort mit der IP-Adresse des Kommunikationsendgeräts und dem Code (CodC) verschlüsselt wurde, der in der Nachricht enthalten ist, die an die von dem Benutzer bereitgestellte E-Mail-Adresse übertragen wurde, und
Mittel (DEC) zum Vergleichen der entschlüsselten Antwort mit einer erwarteten Antwort, um den Zugriff auf den Webserver durch den Benutzer zu autorisieren, wenn die entschlüsselte Antwort der erwarteten Antwort entspricht.

9. Computerprogramm, das in einem Webserver (SW) zur Steuerung einer sicheren Registrierung bei einem Dienst, der von dem Webserver (SW) bereitgestellt wird, von einem Kommunikationsendgerät (TC) in einem Telekommunikationsnetzwerk (RT) umgesetzt werden kann, wobei das besagte Programm Befehle umfasst, die die folgenden Schritte durchführen, wenn das Programm in dem besagten Webserver geladen und ausgeführt wird:
im Anschluss an eine Verbindung des Kommunikationsendgeräts (TC) mit dem Webserver (SW), der den Benutzer dazu aufforderte, eine E-Mail-Adresse bereitzustellen, Speichern (E2) eines dynamisch erstellten Codes in Verbindung mit der IP-Adresse des Kommunikationsendgeräts (TC) und Übertragen einer Nachricht, die den Code (CodC) enthält, an die von dem Benutzer bereitgestellte E-Mail-Adresse,
Übertragen (E3) einer Anwendung (App) an das Kommunikationsendgerät (TC), das die empfangene Anwendung (App) automatisch installiert, wobei die Anwendung einen automatisierten Test erstellen kann, um Computer von Menschen zu unterscheiden, und eine Antwort auf den Test direkt an den Webserver übertragen kann,
Entschlüsseln (E5) einer Antwort auf einen von der Anwendung (App) erstellten Test, die von dem Benutzer bereitgestellt und von dem Kommunikationsendgerät (TC) übertragen wurde, wobei die Antwort mit der IP-Adresse des Kommunikationsendgeräts und dem Code (CodC) verschlüsselt wurde, der in der Nachricht enthalten ist, die an die von dem Benutzer bereitgestellte E-Mail-Adresse übertragen wurde, und
Vergleichen (E6) der entschlüsselten Antwort mit einer erwarteten Antwort, um den Zugriff auf den Webserver durch den Benutzer zu autorisieren, wenn die entschlüsselte Antwort der erwarteten Antwort entspricht.

## Claims

1. A method for checking a secure registration to a service provided by a web server (SW) from a communication terminal (TC) in a telecommunications network (RT), said method comprising the following steps executed within the web server:
after a communication terminal (TC) connects to the web server (SW) that prompted the user to provide an e-mail address, saving (E2) a code (CodC) dynamically generated as a match for the IP address of the communication terminal (TC) and transmitting a message containing the code (CodC) to the e-mail address provided by the user;
transmitting (E3) an application (App) to the communication terminal (TC) that automatically installs the received application (App), the application being able to generate an automated test in order to distinguish computers from humans and able to transmit a response to the test directly to the web server;
decrypting (E5) a response to a test generated by the application (App) that was provided by the user and transmitted from the communication terminal (TC), the response having been encrypted with the IP address of the communication terminal and the code (CodC) contained in the message transmitted to the e-mail address provided by the user; and
comparing (E6) the decrypted response with an expected response in order to allow access to the web server by the user if the decrypted response matches the expected response.

2. A method according to claim 1, wherein the application (App) is in the form of program instructions executable by a web browser of the communication terminal (TC).

3. A method according to claim 1 or 2, wherein the test generated by the application (App) is a "captcha"-type test.

4. A method according to one of the claims 1 to 3, wherein the web server (SW) dynamically produces parameters (Par) for said test provided by the application (App) and transmits the application (App) including the parameters (Par) to the communication terminal (TC).

5. A method according to claim 4, wherein the web server (SW) saves an expected response as a match for the IP address of the communication terminal (TC), the expected response depending on the parameters produced.

6. A method according to one of the claims 1 to 5, wherein the web server (SW) transmits a message to the communication terminal (TC) in order to inform the user that a message was transmitted to the e-mail address provided by the user.

7. A method according to one of the claims 1 to 6, wherein the web server (SW) further verifies that said response was sent from the same IP address as the one saved previously as a match for the generated code (CodC).

8. A web server (SW) for checking a secure registration to a service provided by the web server (SW) from a communication terminal (TC) in a telecommunications network (RT), comprising:
means (GEN) for saving a code generated dynamically as a match for the IP address of the communication terminal (TC) and transmitting a message containing the code (CodC) to an e-mail address provided by the user, after a communication terminal (TC) connects to the web server (SW) that prompted the user to provide the e-mail address;
means (GEN) for transmitting an application (App) to the communication terminal (TC) that automatically installs the received application (App), the application being able to generate an automated test in order to distinguish computers from humans and able to transmit a response to the test directly to the web server;
means for decrypting (DEC) a response to a test generated by the application (App) that was provided by the user and transmitted from the communication terminal (TC), the response having been encrypted with the IP address of the communication terminal and the code (CodC) contained in the message transmitted to the e-mail address provided by the user; and
means (DEC) for comparing the decrypted response with an expected response in order to allow access to the web server by the user if the decrypted response matches the expected response.

9. Computer program able to be implemented in a web server (SW) for checking a secure registration to a service provided by the web server (SW) from a communication terminal (TC) in a telecommunications network (RT), said program comprising instructions which, when the program is loaded and executed in said web server, carry out the following steps:
after a communication terminal (TC) connects to the web server (SW) that prompted the user to provide an e-mail address, saving (E2) a code dynamically generated as a match for the IP address of the communication terminal (TC) and transmitting a message containing the code (CodC) to the e-mail address provided by the user;
transmitting (E3) an application (App) to the communication terminal (TC) that automatically installs the received application (App), the application being able to generate an automated test in order to distinguish computers from humans and able to transmit a response to the test directly to the web server;
decrypting (E5) a response to a test generated by the application (App) that was provided by the user and transmitted from the communication terminal (TC), the response having been encrypted with the IP address of the communication terminal and the code (CodC) contained in the message transmitted to the e-mail address provided by the user; and
comparing (E6) the decrypted response with an expected response in order to allow access to the web server by the user if the decrypted response matches the expected response.
